# FASCICULE DE BREVET EUROPEEN

(11) **EP 1 564 137 B1**
(45) Date de publication et mention de la délivrance du brevet: **16.01.2008**
(21) Numéro de dépôt: 05101022.1
(22) Date de dépôt: 11.02.2005
(51) Int. Cl.: B64C 25/16

(54) **Trappe de train d'atterrissage à cinématique contrôlée**
Fahrwerkstür mit kontrolliertem Bewegungsablauf beim Öffnen und Schliessen
Landing gear door with controlled opening and closing path

(30) Priorité: 13.02.2004 FR 0450262
(43) Date de publication de la demande: 17.08.2005
(73) Titulaire: AIRBUS France, 31060 Toulouse (FR)
(72) Inventeur: Rouyre, François, 31700, CORNEBARRIEU (FR)
(74) Mandataire: Poulin, Gérard

(56) Documents cités:
- EP-A- 1 129 938
- EP-A- 1 129 939
- WO-A-01/56878
- GB-A- 1 220 130
- US-A- 2 457 625
- US-A- 2 731 221

## Description

### Domaine technique

L'invention concerne un ensemble constitué d'une case de train d'atterrissage d'aéronef, d'une trappe apte à former la case de train et dont la cinématique est contrôlée, et d'un train d'atterrissage apte à être logé dans la case de train.

La trappe selon l'invention peut être utilisée pour fermer une case de train servant à loger un train d'atterrissage sur tout type d'aéronef, notamment lorsque le train d'atterrissage est placé sous le fuselage de celui-ci.

### Etat de la technique

Une trappe de train d'atterrissage comprend habituellement un panneau rigide monobloc. Ce panneau est généralement fixé sur des bras, par lesquels il est articulé sur la structure de l'aéronef autour d'un axe de pivotement décalé vers l'intérieur de la case de train par rapport audit panneau. Un vérin est interposé entre le panneau et la structure, à l'intérieur de la case de train, pour commander le pivotement du panneau vers l'extérieur du fuselage lors de la sortie du train d'atterrissage.

L'agencement de l'axe de pivotement à l'intérieur de la case de train est dû au fait qu'il n'est pas possible, dans la pratique, de placer des charnières directement sur le fuselage, notamment pour préserver la continuité aérodynamique de celui-ci.

Pour des raisons de sécurité, liées aux risques d'éclatement des pneumatiques, il est souhaitable qu'une trappe de train d'atterrissage puisse être ouverte et fermée sans entrer en contact avec les roues, lorsque le train est sorti.

Les trappes existantes à panneau monobloc pivotant ne permettent pas de résoudre ce problème. En effet, lorsque le train d'atterrissage est sorti, l'extrémité du panneau interfère avec les roues pendant ses mouvements d'ouverture et de fermeture.

Le document EP-A-1 129 939 décrit une trappe de train d'atterrissage d'aéronef formée de deux panneaux eux-mêmes constitués de deux éléments dont les bords adjacents sont articulés entre eux. Les éléments centraux de chacun des panneaux sont montés directement pivotants sur la structure de l'aéronef par un axe de pivotement parallèle aux axes d'articulation des éléments formant les panneaux. Un actionneur agit sur chacun des éléments centraux pour les faire pivoter autour de leurs axes de pivotement. Des mécanismes à biellettes relient entre eux les deux éléments de chaque panneau pour contrôler l'articulation des éléments latéraux sur les éléments centraux lorsque ces derniers pivotent sur la structure de l'aéronef.

Le document WO-A-2004/000502 décrit un ensemble apte à fermer une case de train d'atterrissage d'aéronef. Cet ensemble comprend deux portes conçues pour être refermées lorsque le train d'atterrissage est déployé, afin de limiter les perturbations aérodynamiques et le bruit. Une ou deux autres portes obturent l'ouverture laissée par les deux premières portes, lorsque le train est rentré.

### Exposé de l'invention

L'invention a principalement pour objet un ensemble case de train d'atterrissage d'aéronef, trappe de fermeture et train d'atterrissage dont la conception originale permet à la trappe de ne pas entrer en contact avec les roues pendant ses mouvements d'ouverture et de fermeture, lorsque le train est sorti.

Conformément à l'invention, cet objectif est atteint au moyen d'un ensemble conforme à la revendication 1.

Lors des manoeuvres d'ouverture et de fermeture de la trappe du train d'atterrissage, cet agencement permet de déplacer le panneau de façon contrôlée selon une loi cinématique précise, déterminée afin que le panneau suive une trajectoire évitant tout contact avec les roues du train d'atterrissage lorsque la trappe est manoeuvrée alors que le train est sorti.

Selon un mode de réalisation préféré de l'invention, le panneau est articulé sur le bras par un axe d'articulation sensiblement parallèle à l'axe de pivotement dudit bras.

Dans ce cas, les moyens de contrôle cinématique comprennent avantageusement au moins deux bielles, articulées bout à bout l'une à l'autre et reliant l'axe de pivotement du bras au panneau, en un emplacement de celui-ci décalé par rapport à l'axe d'articulation, et des moyens de contrôle d'inclinaison du panneau, interposés entre les deux bielles.

De préférence, une première des bielles, reliant l'axe de pivotement du bras à l'autre bielle, est coudée de façon à réduire l'angle formé entre les deux bielles, dans une zone d'articulation de celles-ci dans laquelle agissent les moyens de contrôle d'inclinaison. Cet agencement permet de limiter la force qui doit être exercée par les moyens de contrôle d'inclinaison pour faire pivoter le panneau à l'extrémité du bras, c'est-à-dire la taille de ces moyens d'actionnement.

Dans le premier mode de réalisation de l'invention, les moyens de contrôle cinématique comprennent aussi, de plus, des moyens de pilotage qui commandent les moyens de contrôle d'inclinaison selon ladite loi cinématique prédéterminée, en réponse à l'actionnement des moyens de commande.

Egalement dans le but de limiter les efforts exercés sur le panneau par les moyens de commande, l'axe d'articulation passe de préférence sensiblement par le centre de gravité du panneau.

Dans le mode de réalisation préféré de l'invention, l'enveloppe extérieure de l'aéronef, c'est-à-dire généralement le fuselage, présente une découpe destinée au passage de chaque bras lors de l'actionnement des moyens de commande. Une plaque coulissante, apte à obturer chaque découpe lorsque la trappe est fermée, est reliée au bras par une biellette articulée qui en commande le coulissement.

Dans la pratique, le panneau est relié, de préférence, à la structure de l'aéronef par plusieurs bras reliés entre eux par une ferrure.

### Brève description des dessins

On décrira à présent, à titre d'exemple illustratif et non limitatif, un mode de réalisation préféré de l'invention, en se référant aux dessins annexés, dans lesquels :
- la figure 1 est une vue de côté, représentant schématiquement une trappe de train d'atterrissage conforme à l'invention, en cours d'ouverture ;
- la figure 2 est une vue de côté, représentant plus en détail la trappe de la figure 1 respectivement dans son état fermé (trait plein), dans son état ouvert (trait pointillé épais) et dans un état intermédiaire (trait pointillé mince) ;
- la figure 3 est une vue comparable à la figure 2, illustrant l'ouverture de la trappe par gravité, en cas de défaillance des moyens de commande, la trame étant représentée en trait plein dans son état ouvert et en trait pointillé en cours d'ouverture ;
- la figure 4 est une vue en perspective, prise de dessus, de la trappe selon l'invention ;
- la figure 5 est une vue de dessus, représentant à plus grande échelle l'une des plaques coulissantes qui obturent les découpes formées dans l'enveloppe extérieure de l'aéronef, pour le passage des bras portant le panneau de la trappe ;
- la figure 6 est une vue en coupe de la plaque coulissante, lorsque la trappe est fermée ; et
- la figure 7 est une vue en coupe de la plaque coulissante, lorsque la trappe est ouverte.

### Description détaillée d'un mode de réalisation préféré de l'invention

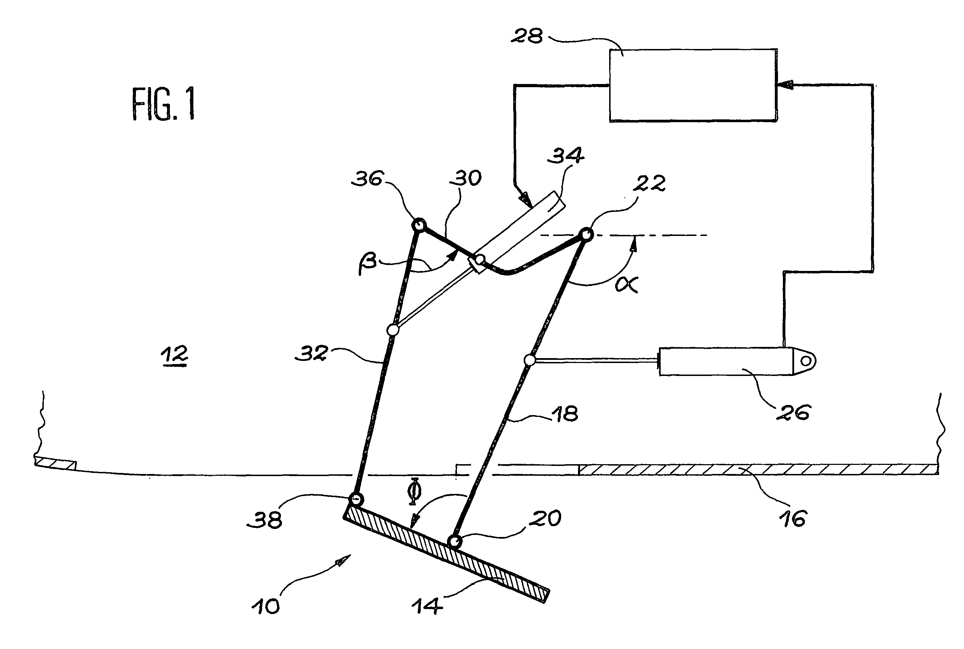

Comme l'illustre schématiquement la figure 1, l'invention concerne une trappe 10 de train d'atterrissage d'aéronef. Une telle trappe 10 est destinée à fermer une case de train 12 dans laquelle est logé le train d'atterrissage, lorsque celui-ci est rentré.

La trappe 10 comprend un panneau 14, rigide et monobloc, dont la forme est complémentaire de celle d'une ouverture formée dans la partie 16 de l'enveloppe extérieure de l'aéronef dans laquelle est implanté le train d'atterrissage associé à ladite trappe. Cette partie 16 de l'enveloppe extérieure de l'aéronef est généralement un élément de fuselage ou de voilure.

Le panneau 14 est supporté par la structure de l'aéronef, à l'intérieur de la case de train 12, par l'intermédiaire d'au moins un bras rigide 18 articulé sur le panneau 14 par un premier axe de pivotement 20 et apte à pivoter sur ladite structure par un deuxième axe de pivotement 22. Les axes de pivotement 20 et 22 sont généralement parallèles l'un à l'autre et orientés selon une direction sensiblement parallèle à l'axe longitudinal de l'aéronef. De plus, l'axe de pivotement 22 est situé du côté intérieur de la trappe 10 par rapport audit axe longitudinal.

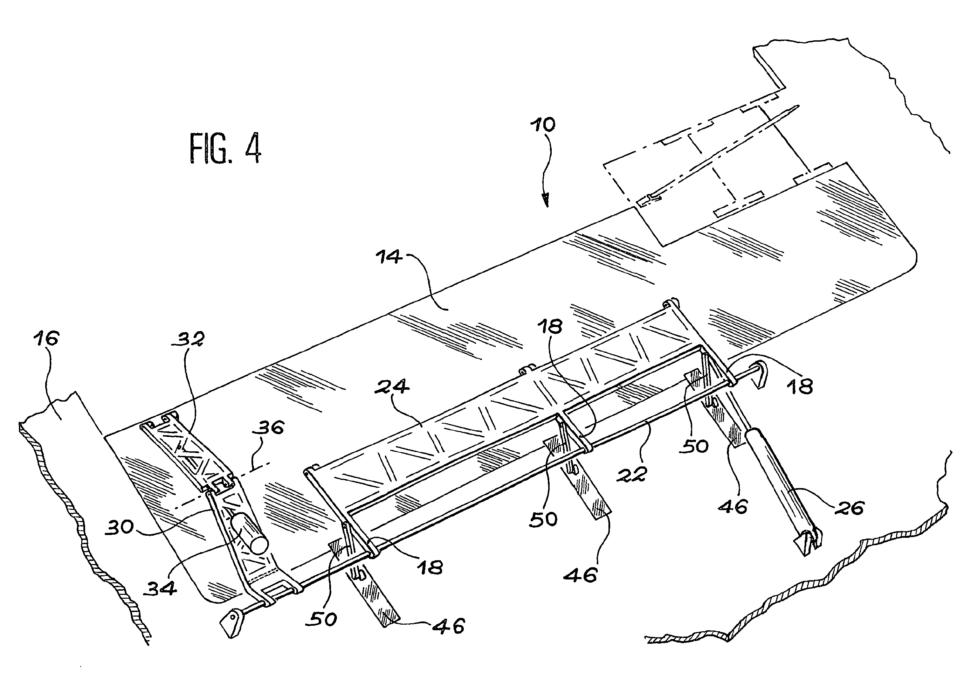

Dans la pratique, la liaison entre le panneau 14 et la structure de l'aéronef est généralement assurée par plusieurs bras 18, par exemple trois, parallèles l'un à l'autre et reliés entre eux par une ferrure 24, comme l'illustre la figure 4.

Des moyens de commande de pivotement, généralement matérialisés par un vérin 26, sont interposés entre le panneau 14 et la structure de l'aéronef, à l'intérieur de la case de train 12. Plus précisément, les extrémités du vérin sont reliées respectivement aux bras rigides 18 et à ladite structure par des pivots.

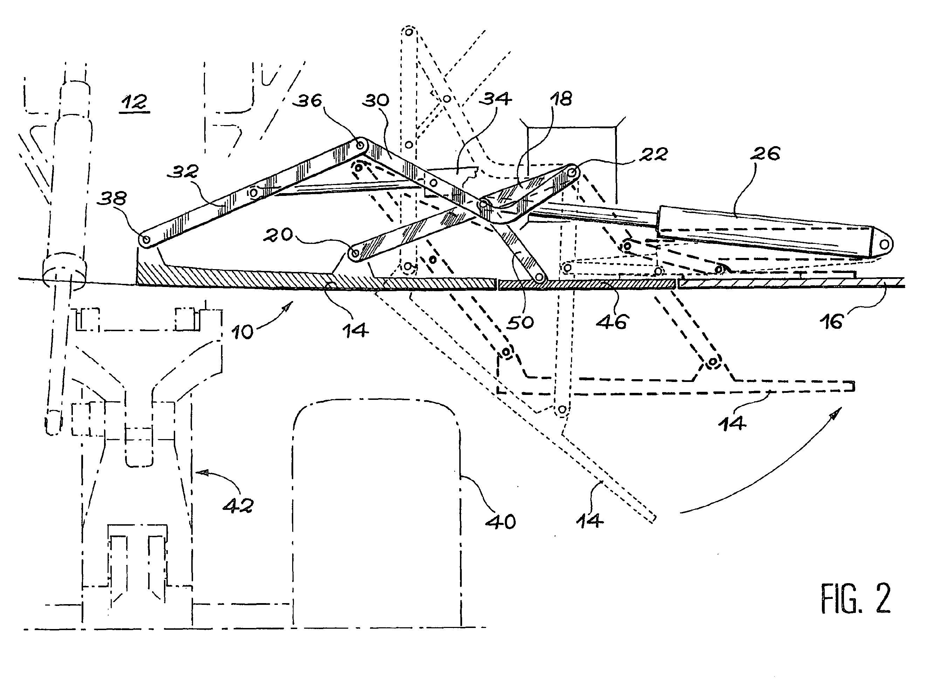

Cet agencement permet à la trappe de passer d'un état fermé, illustré en trait plein sur la figure 2, dans un état ouvert, illustré en trait pointillé épais sur la figure 2, lors d'un actionnement des moyens de commande.

Avantageusement, l'axe de pivotement 20 par lequel le panneau 14 est monté sur les bras 18 passe sensiblement par le centre de gravité du panneau 14. Cet agencement permet de minimiser les efforts qui doivent être appliqués sur le panneau par le vérin 26. On minimise ainsi, par conséquent, la taille et la masse du vérin.

Conformément à l'invention, des moyens de contrôle cinématique sont prévus pour modifier automatiquement le positionnement angulaire du panneau 14 par rapport aux bras 18, en fonction du positionnement angulaire de ceux-ci autour de l'axe de pivotement 22, lors d'un actionnement du vérin 26. Plus précisément, cette modification automatique du positionnement angulaire du panneau 14 est faite en appliquant une loi cinématique prédéterminée, choisie afin que la trajectoire suivie par le panneau 14 lors de son ouverture et de sa fermeture évite tout risque de contact avec les roues du train d'atterrissage lorsque celui-ci est sorti.

Comme l'illustre schématiquement la figure 1, les moyens de contrôle cinématique comprennent un mécanisme apte à faire varier la valeur de l'angle Φ formé entre les bras 18 et le panneau 14, ainsi que des moyens de pilotage 28 qui agissent sur ce mécanisme pour faire varier la valeur de l'angle Φ selon la loi cinématique prédéterminée, en fonction du positionnement angulaire des bras 18 autour de l'axe de pivotement 22. Dans la pratique, ce positionnement angulaire peut notamment être défini par l'angle α formé par les bras 18 avec l'horizontale. La loi cinématique appliquée par les moyens de pilotage 28 est alors du type Φ = f (α).

Dans le mode de réalisation représenté sur les figures, les moyens de contrôle cinématique comprennent un mécanisme qui inclut une première bielle 30 dont une première extrémité est articulée sur l'axe de pivotement 22, une deuxième bielle 32 dont les extrémités sont articulées respectivement sur l'autre extrémité de la première bielle 30 et sur le panneau 14, et des moyens de contrôle d'inclinaison du panneau 14, matérialisés par un vérin 34.

De façon plus précise, la première bielle 30 est coudée vers le panneau 14, de telle sorte que sa partie articulée sur la deuxième bielle 32, rectiligne, forme avec celle-ci un angle aigu relativement faible lorsque la trappe est fermée. En faisant agir le vérin 34 entre la deuxième bielle 32 et la partie de la première bielle 30 articulée sur celle-ci, on limite ainsi les efforts qui doivent être appliqués par le vérin 34 entre les deux bielles. Ceci permet de réduire la taille et la masse dudit vérin.

Sur les figures, les axes par lesquels la deuxième bielle 32 est articulée respectivement sur la première bielle 30 et sur le panneau 14 sont désignés par les références 36 et 38. Ces axes sont parallèles aux axes de pivotement 20 et 22 des bras 18. En outre, l'axe 38 est déporté vers l'extérieur de l'aéronef, par rapport à l'axe de pivotement 20 du bras 18.

Grâce à l'agencement qui vient d'être décrit, une mise en oeuvre du vérin 34 permet de faire varier l'angle β entre les bielles 30 et 32 et, par conséquent, l'angle Φ entre le panneau 14 et les bras 18. Ainsi, lors d'un actionnement du vérin 26 commandant l'ouverture et la fermeture de la trappe, les moyens de pilotage 28 commandent automatiquement la mise en oeuvre du vérin 34, de façon à faire varier l'angle Φ selon la loi Φ = f(α) prédéterminée, programmée dans les moyens de pilotage 28. Cela permet de faire suivre au panneau 14 une trajectoire conçue pour éviter tout obstacle tel que les roues du train d'atterrissage, lorsque celui-ci est sorti, comme l'illustre la figure 2.

La loi cinématique Φ = f(α) peut être quelconque, à condition de satisfaire l'objectif rappelé ci-dessus. Les valeurs des angles Φ_{F} et α_{F} correspondant à l'état fermé de la trappe sont connues par construction. Il en est de même pour les angles Φ_{O} et α_{O} correspondant à l'état ouvert de la trappe.

Par ailleurs, on choisit au moins une position intermédiaire, correspondant par exemple à la valeur α_{A} de l'angle α pour laquelle l'axe de pivotement 20 du panneau sur les bras 18 est le plus proche de l'obstacle à éviter. On donne alors à l'angle Φ une valeur Φ_{A} telle que, par exemple, le panneau 14 soit orienté parallèlement à la tangente à l'obstacle (la roue) ou perpendiculairement aux bras 18.

Enfin, on détermine, par exemple, la loi Φ = f(α) de façon que celle-ci corresponde à une droite passant par les points (Φ_{F}, α_{F}) et (Φ_{A}, α_{A}), lorsque Φ varie de Φ_{F} à Φ_{O}, et de façon que Φ reste constant et égal à Φ_{O} lorsque α continue à décroître.

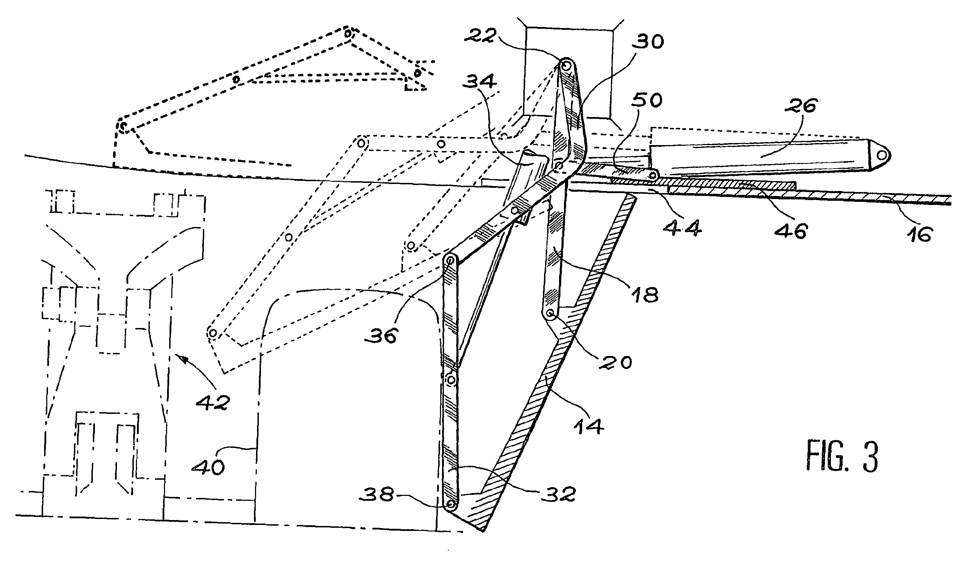

Comme on l'a représenté schématiquement sur la figure 3, la trappe de train d'atterrissage conforme à l'invention est agencée de telle sorte que son ouverture intervienne automatiquement par gravité, en cas de défaillance des vérins 26 et 34.

Ainsi, on voit sur cette figure que la roue 40 du train d'atterrissage 42 vient alors en appui sur la face supérieure du panneau 14, de façon à pousser celui-ci vers le bas. Cela provoque à la fois le pivotement des bras 18 autour de leur axe de pivotement 22 et le pivotement des bielles 30 et 32 autour du même axe de pivotement. Le train d'atterrissage 42 peut ainsi sortir intégralement pour assurer l'atterrissage de l'avion. Dans ces conditions de fonctionnement dégradées, la trappe est refermée manuellement au sol.

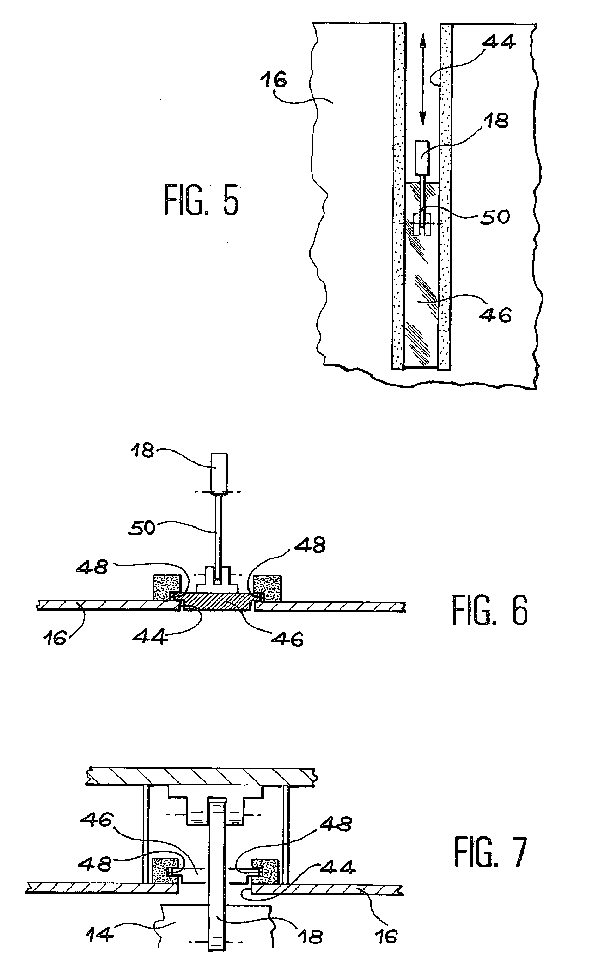

Comme le montrent notamment les figures 5 à 7, une découpe 44 est formée, au droit de chacun des bras 18, dans le bord intérieur de l'ouverture de l'enveloppe 16 prévue pour être obturée par le panneau 14 lorsque la trappe est fermée. Les découpes 44 permettent aux bras 18 de pivoter vers l'intérieur de l'aéronef au-delà du bord de l'ouverture formée dans l'enveloppe 16, lors de l'ouverture de la trappe.

Pour préserver la continuité aérodynamique de l'enveloppe 16 lorsque la trappe du train d'atterrissage est fermée, une plaque coulissante 46 est associée à chaque découpe 44. Les plaques coulissantes 46 sont guidées dans des rainures 48 formées sur les bords latéraux des découpes 44 et chacune d'entre elles est reliée au bras 18 correspondant par une biellette articulée 50.

Grâce à cet agencement, les découpes 44 s'ouvrent automatiquement et de façon progressive pour laisser le passage aux bras 18 lorsque le vérin 26 commande l'ouverture de la trappe, et inversement. De plus, comme l'illustrent notamment les figures 6 et 7, les rainures 48 sont réalisées de façon telle que la surface extérieure de chacune des plaques coulissantes 46 affleure la surface extérieure de l'enveloppe 16 lorsque lesdites plaques remplissent les découpes, alors que les plaques coulissantes 46 viennent se placer au-dessus de l'enveloppe 16 lorsqu'elles coulissent vers l'intérieur de l'aéronef.

Bien entendu, le mode de réalisation qui vient d'être décrit n'est donné qu'à titre d'exemple non limitatif de la portée de l'invention. Ainsi, comme on l'a déjà mentionné, la loi cinématique qui relie les angles α et Φ peut être quelconque, sans sortir du cadre de l'invention.

## Revendications

1. Ensemble constitué d'une case (12) de train d'atterrissage d'aéronef, d'une trappe (10) apte à fermer la case de train (12) et d'un train d'atterissage (42) apte à être logé dans la case de train, la trappe (10) comprenant un panneau rigide(14), au moins un bras (18) reliant ledit panneau à une structure (16) de l'aéronef à l'intérieur de la case de train, par l'intermédiaire d'un axe de pivotement (22) du bras sur ladite structure, et des moyens (26) de commande de pivotement du bras (18) autour de l'axe de pivotement (22), **caractérisé en ce que** le panneau (14) est articulé sur le bras (18) et des moyens (28, 30, 32, 34) de contrôle cinématique sont prévus pour modifier le positionnement angulaire du panneau (14) par rapport au bras (18) en fonction du positionnement angulaire du bras (18) autour de l'axe de pivotement (22), lors d'un actionnement des moyens de commande (26), selon une loi cinématique prédéterminée telle que le panneau (14) suive une trajectoire évitant tout contact avec les roues (40) du train d'atterrissage (42) lors d'un actionnement des moyens de commande (26) pendant les mouvements d'ouverture et de fermeture de la trappe alors que le train est sorti.

2. Ensemble selon la revendication 1, dans lequel le panneau (14) est articulé sur le bras (18) par un axe d'articulation (20) sensiblement parallèle à l'axe de pivotement (22) du bras.

3. Ensemble selon la revendication 2, dans lequel les moyens de contrôle cinématique comprennent au moins deux bielles (30, 32), articulées bout à bout l'une à l'autre et reliant l'axe de pivotement (22) du bras (18) au panneau (14), en un emplacement de celui-ci décalé par rapport à l'axe d'articulation, et des moyens (34) de contrôle d'inclinaison du panneau (14), interposés entre les deux bielles (30, 32).

4. Ensemble selon la revendication 3, dans lequel une première (30) des bielles, reliant l'axe de pivotement (22) du bras (18) à l'autre bielle (32), est coudée de façon à réduire l'angle formé entre les deux bielles, dans une zone d'articulation de celles-ci dans laquelle agissent les moyens de contrôle d'inclinaison (34).

5. Ensemble selon l'une quelconque des revendications 3 et 4, dans lequel les moyens de contrôle cinématique comprennent, de plus, des moyens de pilotage (28) qui commandent les moyens (34) de contrôle d'inclinaison selon ladite loi cinématique prédéterminée, en réponse à l'actionnement des moyens de commande (26).

6. Ensemble selon l'une quelconque des revendications 2 à 5, dans lequel l'axe d'articulation (20) passe sensiblement par le centre de gravité du panneau (14).

7. Ensemble selon l'une quelconque des revendications précédentes, dans lequel une partie de l'enveloppe extérieure (16) de l'aéronef délimitant la case de train présente une découpe (44) pour le passage de chaque bras (18) lors de l'actionnement des moyens de commande (26), une plaque coulissante (46), apte à obturer chaque découpe lorsque la trappe est fermée, étant reliée au bras par une biellette articulée (50).

8. Ensemble selon l'une quelconque des revendications précédentes, dans lequel le panneau (14) est relié à la structure (16) de l'aéronef par plusieurs bras (18) reliés entre eux par une ferrure (24).

## Claims

1. Assembly constituted by an aircraft landing gear compartment (12), a door (10) able to close the landing gear compartment (12) and a landing gear (42) which can be housed in the gear compartment, the door (10) comprising a rigid panel (14), at least one arm (18) connecting the said panel to an aircraft structure (16) within the compartment through a pivot pin (22) fixing the arm to the said structure, and means (26) of controlling pivoting of the arm (18) about the pivot pin (22), **characterized in that** the panel (14) is hinged on the arm (18) and kinematic control means (28, 30, 32, 34) are provided to modify the angular position of the panel (14) with respect to the arm (18) as a function of the angular position of the arm (18) about the pivot pin (22), when the control means (26) are actuated, according to a predetermined kinematic law such that the panel (14) follows a trajectory preventing any contact with the wheels (40) of the landing gear (42) when the control means (26) are activated during the door opening and closing movements while the landing gear is extended.

2. Assembly according to claim 1, wherein the panel (14) is hinged onto the arm (18) by a hinge pin (20) approximately parallel to the pivot pin (22) of the arm.

3. Assembly according to claim 2, wherein the kinematic control means comprise at least two connecting rods (30, 32) hinged end to end to each other and connecting the pivot pin (22) of arm (18) to the panel (14), at a location on the panel offset from the hinge pin, and means (34) of controlling the inclination of the panel (14), inserted between the two connecting rods (30, 32).

4. Assembly according to claim 3, wherein a first (30) of the connecting rods connecting the pivot pin (22) of the arm (18) to the other connecting rod (32) is bent so as to reduce the angle formed between the two connecting rods, in an area in which they are hinged and in which the inclination control means (34) act.

5. Assembly according to any one of claims 3 and 4, wherein the kinematic control means also comprise control means (28) that control the inclination control means (34) according to the said predetermined kinematic law, in response to actuation of the control means (26).

6. Assembly according to any one of claims 2 to 5, wherein the hinge axis (20) passes approximately through the centre of gravity of the panel (14).

7. Assembly according to any one of the previous claims, wherein an outer skin (16) of the aircraft is provided with a cutout (44) through which each arm (18) passes when the control means (26) are actuated, a sliding plate (46) capable of closing off each cutout when the door is closed being connected to the arm by an articulated door panel rod (50).

8. Assembly according to any one of the previous claims, wherein the panel (14) is connected to the aircraft structure (16) by several arms (18) connected to each other by a fitting (24).

## Patentansprüche

1. Einheit, die aus einem Gehäuse (12) eines Luftfahrzeug-Fahrwerks, einer Falttür (10), welche das Fahrwerkgehäuse (12) schließen kann, und einem Fahrwerk (42), das in dem Fahrwerkgehäuse untergebracht werden kann, gebildet ist, wobei die Falttür (10) eine starre Platte (14), mindestens einen Arm (18), der die Platte mit einer Struktur (16) des Luftfahrzeugs im Inneren des Fahrwerkgehäuses mittels einer Dreh-/Schwenkachse (22) des Arms an der Struktur verbindet, sowie Mittel (26) zur Steuerung des Drehens/Schwenkens des Arms (18) um die Dreh-/Schwenkachse (22) umfasst, **dadurch gekennzeichnet, dass** die Platte (14) gelenkig mit dem Arm (18) verbunden ist, und Mittel (28,30,32,34) zur Bewegungssteuerung vorgesehen sind, um die Winkelposition der Platte (14) in Bezug auf den Arm (18) in Abhängigkeit von der Winkelposition des Arms (18) um die Dreh-/Schwenkachse (22) herum bei einer Betätigung der Steuermittel (26) gemäß einem vorbestimmten Bewegungsgesetz so zu modifizieren, dass die Platte (14) eine Bewegungsbahn verfolgt, welche jeglichen Kontakt mit den Rädern (40) des Fahrwerks (42) bei einer Betätigung der Steuermittel (26), während der Öffnungs- und Schließbewegungen der Falttür, wenn das Fahrwerk ausgefahren ist, vermeidet.

2. Einheit nach Anspruch 1, wobei die Platte (14) mit dem Arm (18) über eine Gelenkachse (20), die im wesentlichen parallel zur Dreh-/Schwenkachse (22) des Arms ist, gelenkig verbunden ist.

3. Einheit nach Anspruch 2, wobei die Bewegungssteuermittel mindestens zwei Kurbelteile (30,32), die aneinandergrenzend gelenkig verbunden sind und die Dreh-/Schwenkachse (22) des Arms (18) mit der Platte (14) an einer Stelle derselben verbinden, die in Bezug auf die Gelenkachse versetzt ist, sowie Mittel (34) zur Steuerung der Neigung der Platte (14), welche zwischen die beiden Kurbelteile (30,32) eingefügt sind, umfassen.

4. Einheit nach Anspruch 3, wobei ein erstes (30) der Kurbelteile, welches die Dreh-/Schwenkachse (22) des Arms (18) mit dem anderen Kurbelteil (32) verbindet, derart abgeknickt bzw. gebogen ist, dass der zwischen den beiden Kurbelteilen gebildete Winkel in einer Gelenkzone derselben, in der die Neigungssteuermittel (34) wirken, verringert ist bzw. wird.

5. Einheit nach einem der Ansprüche 3 oder 4, wobei die Bewegungssteuermittel außerdem Ansteuermittel (28) umfassen, welche die Neigungssteuermittel (34) gemäß dem vorbestimmten Bewegungsgesetz in Reaktion auf die Betätigung der Steuermittel (26) ansteuern.

6. Einheit nach einem der Ansprüche 2 bis 5, wobei die Gelenkachse (20) im wesentlichen durch das Schwerkraftzentrum der Platte (14) verläuft.

7. Einheit nach einem der vorangehenden Ansprüche, wobei ein Teil der äußeren Umhüllung (16) des Luftfahrzeugs, welche das Fahrwerkgehäuse begrenzt, einen Ausschnitt (44) für den Durchgang jedes Arms (18) bei der Betätigung der Steuermittel (26) aufweist, wobei eine verschiebbare Platte (46), welche jeden Ausschnitt verschließen kann, wenn die Falttür geschlossen ist, mit dem Arm durch ein Gelenkkurbelteil (50) verbunden ist.

8. Einheit nach einem der vorangehenden Ansprüche, wobei die Platte (14) mit der Struktur (16) des Luftfahrzeugs über mehrere miteinander durch ein Beschlagteil (24) verbundene Arme (18) verbunden ist.
